# EUROPEAN PATENT APPLICATION

(11) **EP 1 158 397 A2**
(43) Date of publication of application: **28.11.2001**
(21) Application number: 01103265.3
(22) Date of filing: 12.02.2001
(51) Int. Cl.: G06F 3/06, G06F 12/08

(54) **Address layout managing method and external storage sub-system**

(30) Priority: 24.05.2000 JP 2000157961; 10.01.2001 JP 2001002055
(71) Applicant: Hitachi, Ltd., Chiyoda-ku, Tokyo 101-8010 (JP)
(72) Inventor: Sueoka, Yuji, Hitachi, Ltd., Intell. Prop. Group, Chiyoda-ku, Tokyo 100-8220 (JP); Arai, Koji, Hitachi, Ltd., Intellect. Prop. Group, Chiyoda-ku, Tokyo 100-8220 (JP)
(74) Representative: Strehl Schübel-Hopf & Partner

(57) **Abstract**

Data migration is made to be performed in short time without actual data move and independent from the capacity of a magnetic disk volume (10a-10d in Fig. 1). As viewed from an upper hierarchical system, "new physical drive installation or addition" (80-15,---- 80-45 in Fig. 8) can be performed easily, rapidly and safely. If a physical address is to be changed after a host generates or updates data in a magnetic disk volume (80-11, ---- 80-14 in Fig. 8), a service processor (250) is made to change only a correspondence between physical and logical addresses (Fig. 3). The physical address can therefore be changed by retaining the data written in a magnetic disk. Accordingly, if there is an idle area in a physical drive (Fig. 8), as viewed from an upper hierarchical system, "physical drive installation or addition" can be performed easily.

## Description

### BACKGROUND OF THE INVENTION

The present invention relates to an external storage sub-system for storing data, and more particularly to techniques for providing data pseudo-migration (data move or data transfer) by changing a data address. Although migration has originally a meaning of data move, in this specification, the migration also means pretending to be data move as viewed from an upper hierarchical system.

An upper hierarchical system which executes a plurality of application software pieces (hereinafter simply called applications) often enters a waiting state for the execution of a specific application, i.e., encounters delayed response from an external storage sub-system. This phenomenon occurs more or less nowadays.

Although there are many reasons for this, the main reason is that an application occupies physical computer resources such as: channel adapters; common busses; cache memories; disk control units such as disk adapters; storage units such as magnetic disk drives; and paths interconnecting these.

A magnetic disk drive is used as a main storage unit of an external storage sub-system for storing data. The external storage sub-system has been designed based upon the storage capacity of a magnetic disk drive. The capacity of a magnetic disk drive is increasing greatly to the extent in excess of anticipation of external storage sub-system design.
The above-described phenomenon of the standby state for the execution of an application is considered to be much increased by a tendency of insufficient hardware resources existing from the upper hierarchical system to magnetic disk drives.

In order to execute an application faster, it is ideal to assign each application with "hardware resources" as viewed from the application. For example, consider the case that a new magnetic disk drive is installed so that data necessary for an application is required to be copied (moved). In such a case, according to conventional techniques, in order to migrate data stored in a magnetic disk volume in a magnetic disk control unit to another magnetic disk volume without data destroy, generally a host computer (upper hierarchical system) copies (backs up) once the data to an external storage unit and then again copies (restores) the data to the other magnetic disk volume as shown in JP-A-5-4610.

A method of migrating data efficiently by connecting two or more magnetic disk drives without using host jobs and host resources (CPU) has been proposed recently. For example, techniques of moving actual data quickly are disclosed in JP-A-2000-56934.
A system allowing relocation of managed files and volumes among arbitrary magnetic disk control units without actual data move is disclosed in JP-A-11-296313 (corresponding U.S. Patent Application serial No. 09/288028).

With these techniques disclosed in JP-A-5-4610 and JP-A-2000-56934, data migration is completed by actual data move although a data move efficiency is different from each other. Therefore, a migration work time increases in proportion to the capacity of a magnetic disk volume constituting the magnetic disk control unit.

The techniques of JP-A-11-296313 disclose an allocation of hardware resources and a change in paths in an external storage sub-system on the side of an upper hierarchical system. However, the phenomenon of the standby state for the execution of an application is not disclosed.

With conventional migration, data is actually moved from a slow physical drive to a fast physical drive capable of high speed access to transfer data to and from the high speed physical drive and improve the total performance of the storage system. Data is required to be actually moved when a physical drive such as a magnetic disk drive of the external storage sub-system is to be exchanged such as: when a magnetic disk drive judged beforehand during maintenance as being left only a short lifetime is to be exchanged; when a slow access magnetic disk drive is to be replaced by a fast access magnetic disk drive; and when a small storage capacity magnetic disk drive is to be replaced by a large storage capacity magnetic disk drive. Conventionally, therefore, the insufficient matter associated with the hardware itself is solved and the system design does not consider cooperation with applications. Access means that a central processing unit or software calls other electronic apparatus and software in order to obtain management data or other data.

Migration used in this specification is not concerned about high speed of a physical drive. This is because the invention intends to solve inconvenience of actual data move in the external storage sub-system when an application is executed which requires "to make an empty area of a physical drive, increase or change a physical drive".

Consider for example the case that a user uses already an external storage sub-system, i.e., effective data is already stored in a physical drive, and that a new RAID group is required to be added to this external storage sub-system and a new physical address is required in order to connect the upper hierarchical system to a volume of the new RAID group. In this case, if it is possible to freely change the physical address corresponding to an already existing volume and the physical address corresponding to the new volume and if it is possible to use data stored in the already existing volume in succession, a user of the external storage sub-system is given a preferential operability of the sub-system. Changing the configuration of an external storage sub-system for the system operability has not been introduced to date.

According to the invention, only a correspondence between physical and logical addresses can be changed faster and easier. With this change, pretensions such as "empty physical drive", "increased physical drive" and "changed physical drive" can be given to the upper hierarchical system and an application under execution by the system. Since there is no actual data move (copy, deletion), the external storage sub-system is not required to execute process regarding the data move.

Pretension of "increased physical drive" can be given to the upper hierarchical system easily and quickly without any actual data move and performance degradation, by changing the correspondence such as "adding one physical drive" relative to an application at the upper hierarchical system. If a service processor is provided with a plurality of functions of changing the correspondence, the function of the external storage sub-system can be changed very easily. The service processor may be a console or other operation terminals provided as standard components of an external storage sub-system, or a portable computer or other electronic terminals connectable or accessible to the external storage sub-system. The service processor can perform maintenance, change or inspection of the function of the external storage sub-system.

According to the invention, since already stored data is not actually moved, the data storage state cannot be changed and high safety, reliability of data can be realized, and a data verification/integration function is not necessary which is otherwise required to be performed upon data move. Even if the address correspondence is changed, reliability of data is not lowered, because the changed correspondence guarantees correct data at the same level as the reliability of electronic apparatus. A verification operation to be performed when data is copied to a magnetic disk is performed by referring to electromagnetic conversion between a magnetic head and a magnetic disk mechanically supported and moving relative to each other. Erroneous operation of electronic circuits and logical circuits cannot be eliminated by the verification operation.

According to the invention, data migration can be performed in a short time without actual data move and independent from the capacity of a magnetic disk volume.

### SUMMARY OF THE INVENTION

An address used by a disk control unit when a host accesses a magnetic disk volume, is called a physical address. The above-described problems can be solved by rearranging data in the order easy to be controlled when a physical address is translated into a logical address. Specifically, data migration is realized by changing the layout of physical and logical addresses in the unit of a certain capacity, e.g., in the unit of a volume. The host may be provided with a physical/logical address translation function or a physical/logical address layout change function to translate a physical address into a logical address.
In this case, the host is required to change corresponding functions.

Allocation of hardware resources of an external storage sub-system on the physical drive side is changed in a volume unit, a file unit, a sector unit, or other proper units. Specifically, a correspondence between a logical address of data stored in a magnetic disk drive of a physical drive and a physical address used upon an access by a host is changed by a service processor.

It is generally difficult for an upper hierarchical system to change a logical address managed by a magnetic disk drive. This is because grouping of physical drives under the control of disk control units (hereinafter also called a controller where applicable) of an external storage sub-system cannot be released in an ordinary case by an upper hierarchical system via the controller. The controller intermediates between a logical address of each magnetic disk drive and a physical address for recognition by the upper hierarchical system, and the upper hierarchical system generally recognizes only this physical address. According to conventional techniques, a pretension of a new installation of a physical drive as viewed from the upper hierarchical system cannot be realized by the upper hierarchical system itself.

If a plurality of RAID groups are assigned to a plurality of physical addresses, it is possible to change a physical address from N-th RAID group to (N+1)-th RAID group in the group unit. This is because the upper hierarchical system can recognize the controller and magnetic disk drives only in the group unit. Also in this case, actually stored user data is required to be moved to a newly assigned group via the upper hierarchical system.

### BRIEF DESCRIPTION OF THE DRAWINGS

Fig. 1 is a block diagram showing an example of an external storage sub-system which performs simple data migration for a magnetic disk volume according to an embodiment of the invention.
Fig. 2 is a diagram showing a correspondence between physical and logical addresses.
Fig. 3 is a diagram illustrating a magnetic disk volume migrating method.
Fig. 4 is a block diagram showing the details of the external storage sub-system shown in Fig. 1.
Fig. 5 is a perspective view of an external storage sub-system to which the invention is applied.
Fig. 6 is a perspective view of a controller as viewed from the front side thereof.
Fig. 7 is a perspective view of a controller as viewed from the back side thereof.
Fig. 8 is a diagram showing a relation between physical and logical drives and a newly set logical drive.
Fig. 9 is a flow chart briefly illustrating a method of changing a correspondence stored in a management table.

### DESCRIPTION OF THE EMBODIMENTS

In an embodiment of the invention, a physical/logical address translating function or a physical/logical address layout changing function is realized by a disk control unit. Such translation or change is performed by using a maintenance personal computer called a service processor and other electronic terminals. The outline of the invention disclosed in this application will be briefly described. Each magnetic disk volume is assigned a physical address to allow a host CPU to access it, and a magnetic disk control unit defines a logical address corresponding to each physical address and stores a correspondence with real magnetic disk drives constituting magnetic disk volumes. A magnetic disk volume belonging to the same magnetic disk control unit can be migrated to an arbitrary physical address without actual data move, by changing the correspondence between a physical address recognizable by a host CPU and a logical address stored in the magnetic disk control unit. In the embodiment of this invention, the correspondence is changed by a maintenance electronic terminal.

A service processor (SVP) is a standard component of an external storage sub-system. When a new physical drive or a magnetic disk is replaced for maintenance, the correspondence between physical/logical addresses is changed by using the service processor. For this change in the correspondence, a remote console may be used via a communication line.

With reference to the accompanying drawings, an example of data migration for a magnetic disk volume according to an embodiment of the invention will be described in detail.

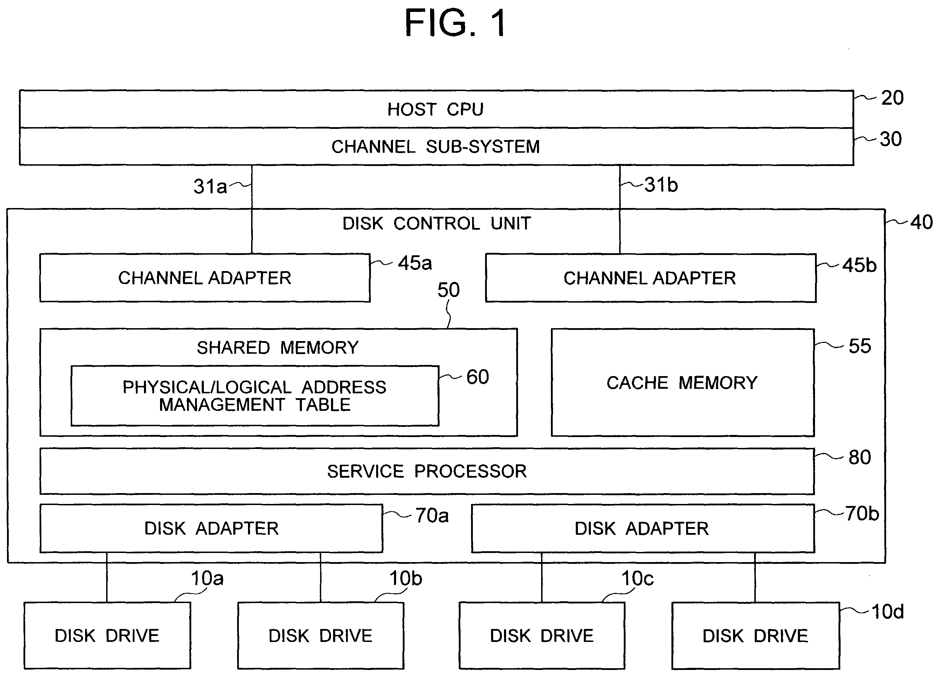

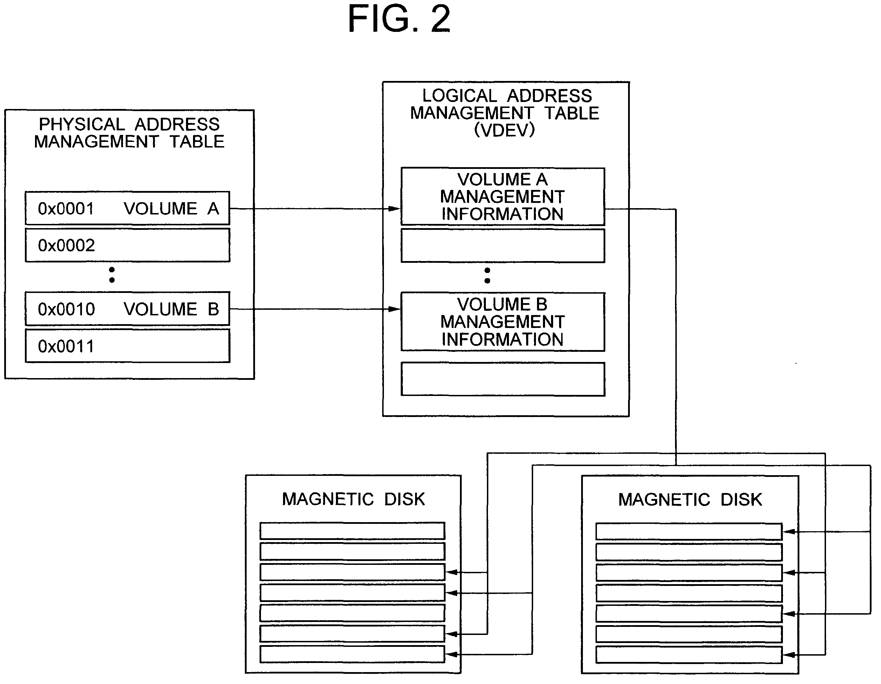

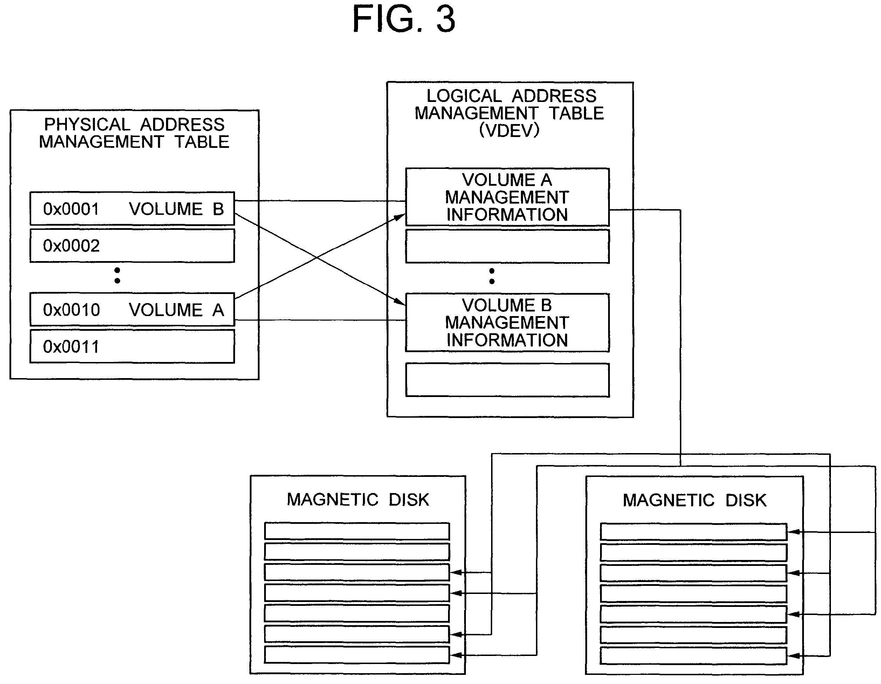

Fig. 1 is a block diagram showing an example of the structure of an external storage sub-system, Fig. 2 is a block diagram showing the details of a correspondence between physical addresses and magnetic disk volumes, and Fig. 3 is a block diagram illustrating a magnetic disk volume migrating method of this invention.

In this embodiment, a magnetic disk sub-system will be described as an example of an external storage sub-system.

A magnetic disk sub-system of this embodiment includes: disk drives 10a to 10d each constituted of one or a plurality of large capacity discs; and a disk control unit 40 disposed between the disk drives 10a to 10d and an upper hierarchical host CPU 20 and a channel sub-system 30 to control data transfer therebetween (refer to Fig. 1).

The disk control unit 40 includes: channel adapters (first interface) 45a and 45b for command transfer via the channel sub-system 30 and channel paths 31a and 31b: disk adapters (second interface) 70a and 70b for data transfer; a cache memory 55 functioning as an intermediate buffer; a physical/logical address management table 60; a shared memory 50 storing the management table 60; and a service processor 80. The cache memory 55, management table 60 and service processor 80 are disposed between the channel adapters and disk adapters. The management table 60 manages physical addresses recognizable by the upper hierarchical channel sub-system 30 and data stored in the disk drives 10a to 10d. The service processor 80 defines a correspondence between physical/logical addresses.

In order to allow the host CPU 20 to use a group of the disk drives 10a to 10d under the control of the disk control unit 40, the service processor 80 first defines physical addresses and corresponding volume types (track size, capacity and the like). Namely, the service processor changes data in a table (memory) of the disk control unit by connecting predetermined ports in the disk control unit through physical wiring, connection via radio wave communications, or optical modulation. The data in the table is generally preset when the external storage sub-system is manufactured. After the sub-system is used for some period and data is accumulated, then data migration of this embodiment is performed.

After the volume types are defined, an access by the host CPU 20 is performed for data generation, update and the like. In accessing a magnetic disk volume from the host CPU 20, a physical address is designated via the channel sub-system 30.

Generated data is written in a magnetic disk volume by referring to the physical/logical address management table 60 in the disk control unit 40. The physical/logical address management table 60 stores a position of a magnetic disk in which actual data written in a disk volume exists. The actual data in the magnetic disk volume may exist in a plurality of magnetic discs of a RAID type or a non-RAID type (refer to Fig. 2).

A non-RAID type means that one physical drive, more practically one magnetic disk drive, corresponds to one volume (logical drive). An external storage sub-system having a plurality of magnetic disk drives managed by the controller is called magnetic disk drives of the non-RAID type.

The magnetic disk drive of the non-RAID type does not include a conventional disk drive in which addresses of physical drives for an upper hierarchical system are set by physical jumper lines or disconnection of such physical jumper lines. Setting techniques by "jumper lines" are inherited to current techniques of electronically setting addresses to electronic circuits by using digital signals. A so-called thread-type magnetic disk drive for electronically setting a predetermined value to an electronic circuit can be assumed to be a magnetic disk drive of the non-RAID type.

A conventional magnetic disk drive has an address of each physical drive for connection to an upper hierarchical system. It is therefore possible to change easily an address by physically setting jumper lines. As magnetic disk drives are used in the RAID structure, an address of each physical drive for the upper hierarchical system is stored in the controller. Therefore, these addresses and other data are not easy to change, which is one reason of making this invention.

If the physical address is changed after the host CPU 20 performs data generation and update to a magnetic disk volume, the service processor changes only the correspondence between physical/logical addresses. It is therefore possible to change the physical address while data written in a magnetic disk is retained (refer to Fig. 3). In the embodiment, the correspondence between physical/logical addresses is changed in a logical volume unit.

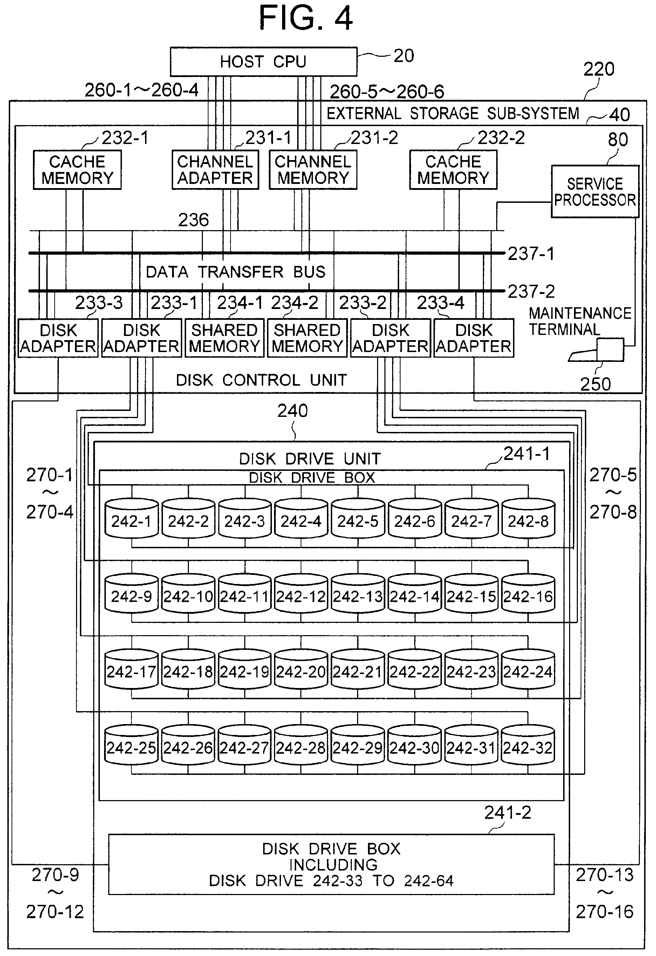

With reference to Figs. 4 to 9, the embodiment will be further detailed, and the above-description will be supplemented when necessary.

The physical/logical address management table (hereinafter abbreviated as management table where applicable) 60 is a table storing a correspondence between an address of physical data as viewed from the host CPU 20 and a storage location of data in the disk drives 10a to 10d controlled by the disk control unit 40. For example, consider the case that the host CPU is a main frame computer of a CKD formation. In this case, an address sent from the host CPU 20 includes a physical address number and a cylinder head number (Vol: CC : HH) corresponding to a disk drive ID and a sector number. Examples of this correspondence of physical address : CC : HH - disk drive ID : sector number are:
0 : 0 : 0 - 242-1 : 0-116,
0 : 0 : 1 - 242-1 : 117-232, and
0 : 0 : 2 - 242-1 : 233-348.

Fig. 4 is a block diagram showing the details of the external storage sub-system shown in Fig. 1. In Fig. 4, reference numerals different from those in Fig. 1 are used. The external storage sub-system includes: channel adapters 231-1 and 231-2, disk adapters 233-1 to 233-4, cache memories 232-1 and 232-2, data transfer busses 237-1 and 237-2, an internal communication bus 236 of the disk control unit 40, and other components.

Disk drives 242-1 to 242-64 managed by the disk control unit are SCSI disk drives. Each of the disk adapters 233-1 to 233-4 controls only a specific disk drive box among disk drive boxes 241-1 and 241-2. Two series of each of data transmission lines 270-1 to 270-16 interconnecting or coupling up the disk drives and disk adapters 233-1 to 233-4 of the disk control unit 40 are provided to increase failure resistance and speed up a response to the disk control unit 40. Upon a data write request from the host CPU 20, the channel adapters 231-1 and 231-2 convert the data format from a variable length format to a fixed length format of a sector unit matching the disk drive of a SCSI specification. If necessary, redundancy data is generated or updated, and the data and redundancy data are duplicatedly buffered in the two cache memories 232-1 and 232-2. The disk adapters 233-1 to 233-4 write the data of the fixed length format in the cache memories 232-1 and 232-2 into the disk drives in the sector unit, in accordance with the contents of the physical/logical address management table 60.

If the data and redundancy data are stored in a plurality of disk drives 242-1 to 242-64 in RAID4 or RAIDS and the data is to be updated, then it is necessary to update also the redundancy data of the redundancy group generated by using the data. In order to update the redundancy data, the channel adapter reads old data corresponding to update data and old redundancy data corresponding to redundancy data generated by using the update data. An exclusive logical sum of the update data, old data, and old redundancy data is calculated and the calculated result is buffered in the cache memory as new redundancy data.

Data is accessed via the cache memory. This cache memory is made non-volatile by a battery back-up of 96 hours at a maximum, and the above data duplication is performed. In this manner, write request data is prevented from being lost. Data transfer to and from the host CPU 20 is performed by using a plurality of data transmission lines 260-1 to 260-8 so that failure resistance is increased and response performance is improved. Duplicated shared memories 234-1 and 234-2 prevent the management table 60 from being lost. Duplicated data transfer buses 237-1 and 237-2 increase failure resistance and improve response performance. The channel adapters 231-1 and 231-2 and disk adapters 233-1 and 233-4 can operate in parallel so that response performance can be improved.

For data transfer between the host CPU 20 and disk drives 242-1 to 242-64, the data transmission lines 260-1 to 260-8, channel adapters 231-1 and 231-2, disk adapters 233-1 to 233-4, data transfer busses 237-1 and 237-2, cache memories 232-1 and 232-2 and data transmission lines 270-1 to 270-16 are all made redundant.

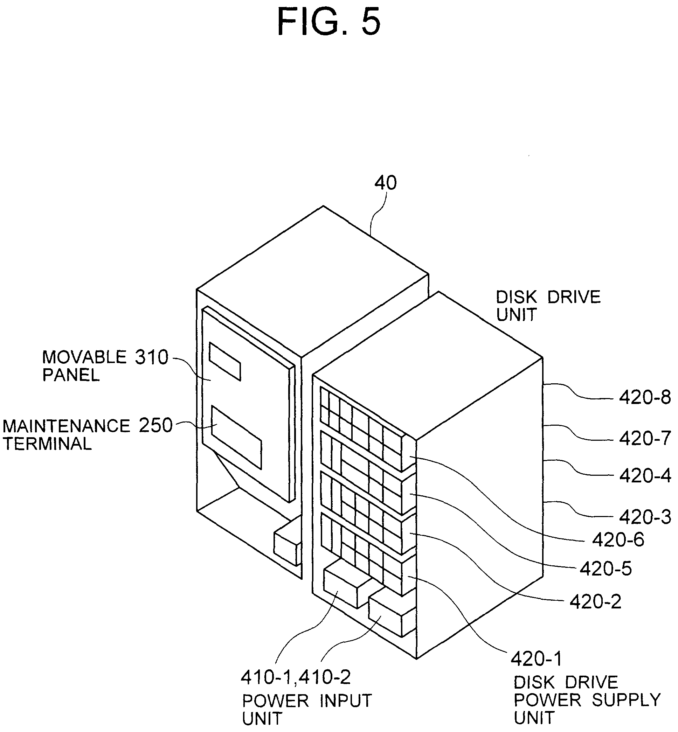

Fig. 5 is a perspective view of the external storage sub-system 220. The size of the external storage sub-system has a width of about 1.3 meters, a depth of about 0.8 meter, and a height of about 1.8 meters. This sub-system has two series of a power supply unit to improve resistance to a power failure at the outside of the system.

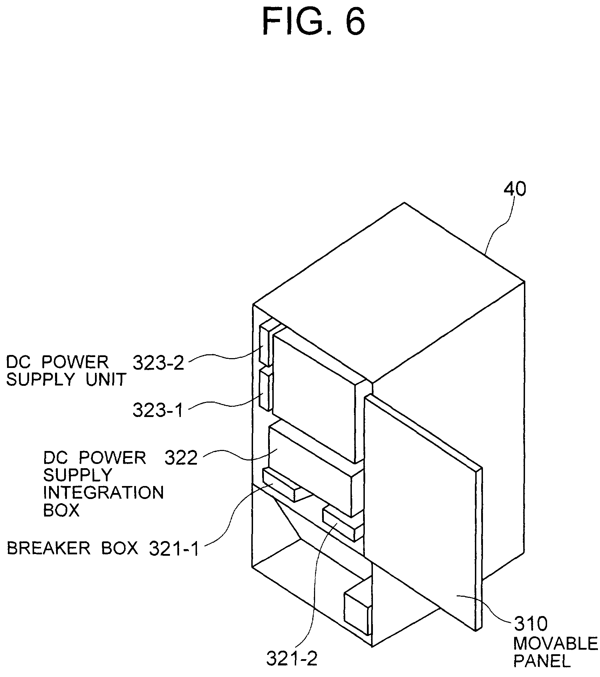

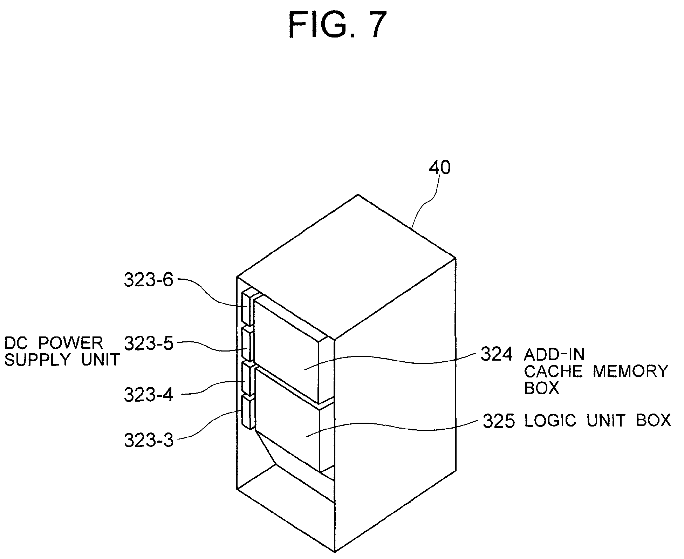

Figs. 6 and 7 are perspective views of the controller (disk control unit) 40 as viewed from the front and back sides thereof. In Fig. 7, a logical unit box has the channel adapters 231-1 and 231-2, disk adapters 233-1 to 233-4, cache memories 232-1 and 232-2 and shared memories 234-1 and 234-2. A d.c. power source integration box 322 (Fig. 6) and a plurality of d.c., power supply units 323-1 to 323-6 have each a redundancy structure of two series and have breaker boxes 321-1 and 321-2.

Of the duplicated or multiplexed components, the shared memories 234-1 and 234-2, cache memories 232-1 and 232-2, channel adapters 231-1 and 231-2, disk adapters 233-1 to 233-4, disk drives 242-1 to 242-64, d.c. power supply units 323-1 to 323-6 and 421-1 to 421-16, and each d.c. power supply unit in the d.c. power supply integration box 322 can be newly added or exchanged through hot swapping. It is therefore possible to perform maintenance during failure, regular maintenance, increase/decrease in hardware structures while data transfer to and from the host CPU 20 is maintained.

Reverting to Fig. 1, the operation of each component will be described more in detail. The service processor 80 is activated by an operator, i.e., user or maintenance person not shown, via the maintenance terminal 250 (Fig. 4). In accordance with an interactive menu displayed on the maintenance terminal by the service processor 80, the operator indirectly enters data necessary for the management table 60 (Fig. 1). Namely, the operator sets the configuration of each redundancy group and each non-redundancy group to the management table 60. Specifically, setting is performed relative to which of the disk drives 10a to 10d is assigned to what disk drive in the redundancy group and non-redundancy group. Setting is performed relative to a type of a layout method, such as RAID5 made of three data disk drives and one parity disk drive, RAID1 made of one data disk drive and one mirror disk drive, and RAID0 without redundancy. Setting is performed relative to how many logical devices are assigned in what manner to each redundancy drive group and each non-redundancy group. Setting is performed relative to a correspondence between a logical address of each disk drive and a physical address of the disk drive as viewed from the upper hierarchical system. In this external storage sub-system, upon issuance of an instruction by an operator, a storage process of forcibly storing data at an alternative storage location may start.

The layout of data or redundancy data may change when data is moved to an alternative reserved disk drive or a new disk drive is additionally installed. Therefore, management data used for identifying the location of current data and redundancy data is stored in unrepresented various tables such as a data layout table. Upon occurrence of a data read or write request from the host CPU 20 to a physical drive, the disk control unit 40 refers to an unrepresented data layout table to check which area in what disk drive among the disk drives 10a to 10d managed by the control unit 40 is the storage area corresponding to the access address to the physical drive, and controls the disk drive.

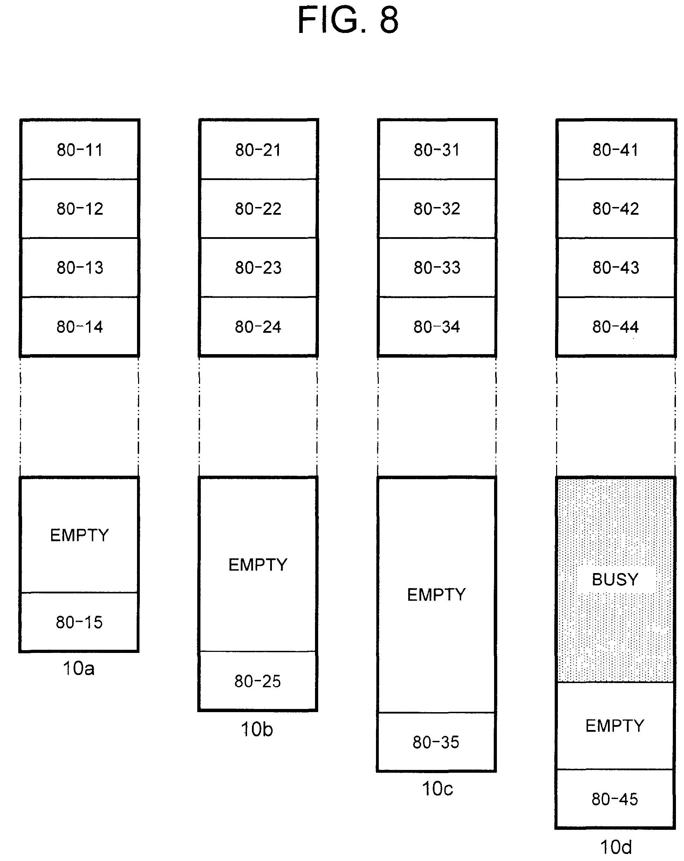

The disk drives 10a to 10d each constitute one redundancy drive group. In Fig. 8, a group of divided areas 80-11, 80-21, 80-31, 80-41 constitutes a redundancy group. Similarly, a group of divided areas 80-12, 80-22, 80-32, 80-42 constitutes a redundancy group, a group of divided areas 80-13, 80-23, 80-33, 80-43 constitutes a redundancy group, and a group of divided areas 80-14, 80-24, 80-34, 80-44 constitutes a redundancy group. A group of divided areas 80-11, 80-21, 80-31, 80-41 and divided areas 80-12, 80-22, 80-32, 80-42 and a group of divided areas 80-13, 80-23, 80-33, 80-43 and divided areas 80-14, 80-24, 80-34, 80-44, each constitute a logical volume. In this example, each disk drive has two logical volumes and each logical volume has two divided areas to provide four redundancy groups in each redundancy drive group. The number of redundancy groups may be increased or reduced.

In accordance with or by referring to the interactive menu displayed on the maintenance terminal by the service processor, the operator enters data necessary for the management table 60 (Fig. 1) to set a new logical address in an idle area of the disk drive shown in Fig. 8 so that the redundancy drive group can be configured. More specifically, by changing the correspondence between physical and logical addresses in the management table 60, newly set areas 80-15, 80-25, 80-35 and 80-45 are formed as the idle areas of the disk drives, these idle areas being set as the redundancy group.

In this case, the correspondence with the physical address as viewed from the upper hierarchical system can be set as desired by changing the physical addresses corresponding to the already defined two logical volumes of the group of divided areas 80-11, 80-21, 80-31, 80-41 and divided areas 80-12, 80-22, 80-32, 80-42 and the group of divided areas 80-13, 80-23, 80-33, 80-43 and divided areas 80-14, 80-24, 80-34, 80-44.

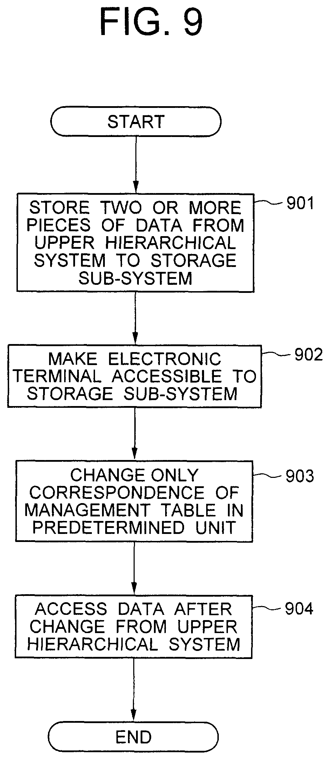

With reference to Fig. 9, a method of changing the correspondence stored in the management table will be described briefly. A user of the upper hierarchical system connecting the external storage sub-system performs a usual operation to enter data (Step 901). While such an operation is repeated, it becomes at some time to newly add a physical drive as viewed from the upper hierarchical system or to change an already using physical drive. At such a time, the service processor 80 is made active to make the controller 40 accessible (Step 902). In accordance with data prepared in the service processor 40 or data externally acquired, only the correspondence between a physical address management table and a logical address management table is changed (Step 903). In this manner, as viewed from the upper hierarchical system, it seems as if a new physical drive is added or already stored data is moved to another physical drive. In an ordinary case, whether the upper hierarchical system can access the moved data is checked for the purposes of operation reliability (Step 904).

Although only logical groups in the RAID group can be exchanged as viewed from the upper hierarchical system according to conventional techniques, new installation or addition of a physical drive or new installation or addition of a logical drive is possible as viewed from the upper hierarchical system according to the invention.

The characteristic functions of the embodiment described above are enumerated as in the following.
1) A function of migrating data in a magnetic disk volume in which effective data has been stored, to another magnetic disk volume in the same magnetic disk control unit, under the control of a magnetic disk control unit without involving another external storage sub-system.
2) A function of migrating data in a magnetic disk volume in which effective data has been stored, under the control of a magnetic disk control unit, to another magnetic disk volume in the same magnetic disk control unit, under the control of a magnetic disk control unit without actually moving data.
3) A function of migrating data in a magnetic disk volume in which effective data has been stored, to another magnetic disk volume in the same magnetic disk control unit at an arbitrary address, under the control of a magnetic disk control unit without actually moving data.

Since the physical and logical addresses are changed without actually moving data, change and new installation of a physical drive can be performed easily, rapidly and safely as viewed from the upper hierarchical system.

Data in a magnetic disk volume in which effective data has been stored under the control of a magnetic disk control unit, can be migrated to another magnetic disk volume in the same magnetic disk control unit, without involving another external storage sub-system and without actually moving the data.

Since the configuration of the external storage sub-system can be changed easily by the controller of the external storage sub-system, compatibility particularly with applications of the upper hierarchical system utilizing the external storage sub-system can be improved.

Having described a preferred embodiment of the invention with reference to the accompanying drawings, it is to be understood that the invention is not limited to the embodiment and that various changes and modifications could be effected therein by one skilled in the art without departing from the spirit or scope of the invention as defined in the appended claims.

## Claims

1. An address layout managing method for an external storage sub-system (220) including a first interface (31a, 45a, 31b, 45b) for coupling to an upper hierarchical system (20), a plurality of disk drives (10a - 10d, 242-1 - 242-32) for storing data, a second interface (70a, 70b, 270-1 - 270-16, 233-1 - 233-4) for coupling to the disk drives, and a disk control unit (40) for controlling the interfaces and disk drives, the method comprising:
a first step (Fig. 2, Step 901 in Fig. 9) of setting a correspondence between physical and logical addresses in a volume unit; and
a second step (Fig. 3, Step 903 in Fig. 9) of setting the correspondence set in the volume unit again in the volume unit while already existing addresses and corresponding data are retained.

2. The address layout managing method according to claim 1, further comprising a third step (Step 902 in Fig. 9) of coupling an electronic terminal (80, 250) to the external storage sub-system, said third step being interposed between said first and second steps.

3. An external storage sub-system comprising:
a first interface for coupling to an upper hierarchical system;
a plurality of disk drives for storing data;
a second interface for coupling to the disk drives; and
a disk control unit for controlling said interfaces and disk drives, wherein:
a table storing a correspondence between physical and logical addresses is stored in a memory (50, 234-1, 234-2); and
data is migrated as viewed from the upper hierarchical system by changing the layout of physical/logical addresses in a constant data amount unit.

4. The external storage sub-system according to claim 3, wherein the constant data amount unit is a volume unit.

5. The external storage sub-system according to claim 3, wherein the plurality of disk drives form a RAID.

6. An external storage sub-system (220) comprising:
a first interface (31a, 45a, 31b, 45b) for coupling to an upper hierarchical system (20);
a plurality of disk drives (10a - 10d, 242-1 - 242-32) for storing data;
a second interface (70a, 70b, 270-1 - 270-16, 233-1 - 233-4) for coupling to the disk drives; and
a disk control unit (40) for controlling said first and second interfaces;
wherein said disk control unit has:
a function of storing and recovering data designated by the upper hierarchical system by using a management table (Fig. 2) storing a correspondence between an address received from said first interface and an address of the disk drive corresponding to the received address; and
a function of making the upper hierarchical system recognize a physical volume by making a service processor (80, 250) connectable to the external storage sub-system change (Fig. 3) the correspondence in the management table.

7. The external storage sub-system according to claim 6, wherein said drives constitute a RAID structure.

8. The external storage sub-system according to claim 6, wherein the service processor connectable to the external storage sub-system is a remote console coupled via a communication line.

9. The external storage sub-system according to claim 6, wherein the correspondence in the management table is changed without actually moving data stored in said disk drive.

10. The external storage sub-system according to claim 6, wherein the correspondence is stored in a volume unit, a file unit, or a sector unit.

11. An address layout managing method for an external storage sub-system (220) which comprises:
a first interface (31a, 45a, 31b, 45b) for coupling to an upper hierarchical system (20),
a plurality of disk drives (10a - 10d, 242-1 - 242-32) for storing data,
a second interface (70a, 70b, 270-1 - 270-16, 233-1 - 233-4) for coupling to the disk drives, and
a disk control unit (40) for controlling the first and second interfaces and disk drives, wherein the disk control unit has a function of storing and recovering data designated by the upper hierarchical system by using a management table (Fig. 2) storing a correspondence between an address received from said first interface and an address of the disk drive corresponding to the received address, said method comprising:
a first step (Step 901 in Fig. 9) of making a service processor (80, 250) accessible to the external storage sub-system;
a second step (Step 903 in Fig. 9) of changing the correspondence in the management table by using the service processor; and
a third step (Step 904 in Fig. 9) of accessing an address after the change from the upper hierarchical system.

12. The address layout managing method according to claim 11, wherein said second step is executed without actually moving data stored in the disk drive.

13. The address layout managing method according to claim 11, wherein changing the correspondence at said second step is executed in a volume unit, a file unit, or a sector unit.
